# EUROPÄISCHE PATENTANMELDUNG

(11) **EP 1 205 495 A2**
(43) Veröffentlichungstag der Anmeldung: **15.05.2002**
(21) Anmeldenummer: 01125350.7
(22) Anmeldetag: 29.10.2001
(51) Int. Cl.: C08F 36/04

(54) **Modifizierungsmittel für die anionische Polymerisation**

(30) Priorität: 09.11.2000 DE 10055497
(71) Anmelder: BAYER AG, 51368 Leverkusen (DE)
(72) Erfinder: Grün, Michael, Dr., 53721 Siegburg (DE); Knauf, Thomas, Dr., 41542 Dormagen (DE); Braubach, Wilfried, 42659 Solingen (DE)

(57) **Zusammenfassung**

Die Erfindung betrifft Modifizierungsmittel für die anionische Polymerisation von konjugierten Dienen oder von konjugierten Dienen mit vinylaromatischen Verbindungen, wobei die Modifizierungsmittel spezielle Aminoether darstellen.

## Beschreibung

Die Erfindung betrifft Modifizierungsmittel für die anionische Polymerisation von konjugierten Dienen oder von konjugierten Dienen mit vinylaromatischen Verbindungen.

Es ist bekannt, dass insbesondere die anionische Polymerisation von konjugierten Dienen gegebenenfalls in Kombination mit anderen ungesättigten Verbindungen, wie vinylaromatischen Verbindungen, in Gegenwart eines sogenannten Modifizierungsmittels durchgeführt wird, um beispielsweise den Gehalt an Vinylgruppen im Polymer zu regeln, da u.a. über den Vinylgehalt im Polymeren die Glasübergangstemperatur und damit andere Eigenschaften, wie Rollwiderstand und Nassrutschfestigkeit, die im Reifenbau wichtig sind, beeinflusst werden können.

Die anionische Polymerisation wird dabei in bekannter Weise in einem inerten organischen Lösungsmittel wie aliphatischen oder aromatischen Kohlenwasserstoffen durchgeführt, in Gegenwart von Alkali-organischen Verbindungen, insbesondere von Alkyl-Lithiumverbindungen als Initiatoren.

Wie erwähnt, werden insbesondere bei der anionischen Polymerisation polare Modifizierungsmittel, wie Ether und tertiäre Amine, welche als Lewis-Basen fungieren, dem Reaktionsgemisch zugesetzt, um die Mikrostruktur der Polymeren zu beeinflussen. Verwiesen wird in diesem Zusammenhang auf EP-A 0 304 589, DE-A 4 234 827, US-A 40 22 959 und US-A 59 06 956.

Die bekannten polaren Modifizierungsmittel besitzen entweder nur Etherstrukturen (z.B. tert.-Butoxyethoxyethan) oder nur tert.-Aminstrukturen (z.B. N,N,N',N'-Tetramethylethylendiamin) oder werden in Form von cyclischen Verbindungen eingesetzt, die eine Kombination von Ether- und tert.-Aminstrukturen (z.B. N-Methylmorpholin) aufweisen.

Die oben erwähnten, bekannten polaren Modifizierungsmittel, die zweizähnige polare Lewis-Basen darstellen, sind insbesondere noch verbesserungswürdig, was z.B. das Verhältnis Modifier : Initiator, den Aufbau einer gleichmäßigen Kettenstatistik bei niedrigen und hohen Temperaturen und den Einbau höherer Gehalte an Vinylgruppen im Polymer anbetrifft. Darüber hinaus haben die bekannten Modifizierungsmittel den Nachteil, dass die Vinylgehalte bei höheren Polymerisationstemperaturen drastisch abfallen und somit einer temperaturempfindlichen Mikrostrukturregelung unterliegen, dass oftmals Blockstyrol mit eingebaut wird und dass bei der Herstellung hochvinylhaltiger Polymere größere Mengen an Modifier im Verhältnis zu Initiator nötig sind. Ein weiterer Nachteil sind die niedrigen Siedepunkte der bekannten Modifier und der damit verbundenen schlechten Abtrennung vom Lösungsmittel.

Aufgabe der vorliegenden Erfindung war es nun, Modifizierungsmittel für die anionische Polymerisation von konjugierten Dienen oder von konjugierten Dienen mit Vinyl-aromatischen Verbindungen zur Verfügung zu stellen, die die genannten Nachteile nicht aufweisen und vor allem Vorteile zeigen im Hinblick auf die Herstellungsweise des Modifizierungsmittels sowie der Mikrostrukturregelung bei kleinsten Mengen an Modifier und die darüber hinaus thermisch stabile Koordinationen mit den lebenden anionischen Kettenenden eingehen.

Gegenstand der vorliegenden Erfindung sind daher Modifizierungsmittel für die anionische Polymerisation von konjugierten Dienen oder von konjugierten Dienen mit Vinyl-aromatischen Verbindungen, die dadurch gekennzeichnet sind, dass sie auf Aminoether der Formel 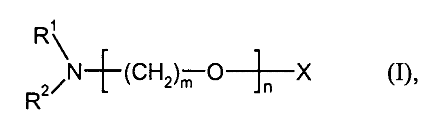 worin
- R¹ und R²: gleich oder verschieden sind und für Alkylreste mit 1 bis 10, bevorzugt 1 bis 4 C-Atomen, Cycloalkylreste mit 5 bis 8, bevorzugt 5 bis 6 C-Atomen, Arylreste mit 6 bis 10, bevorzugt 6 Kohlenstoffatome, und für Aralkylreste mit 7 bis 15, bevorzugt 7 bis 9 Kohlenstoffatome, stehen,
- X: für 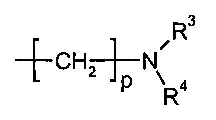 steht,
wobei R³ und R⁴ die Bedeutung von R¹ und R² besitzen und p für ganze Zahlen von 1 bis 6, bevorzugt 1 bis 3, steht,
- m: für ganze Zahlen von 1 bis 6, bevorzugt 1 bis 3, und
- n: für ganze Zahlen von 1 bis 6, bevorzugt 1 bis 3, stehen,
beruhen.

Besonders bevorzugt werden erfindungsgemäß als Modifizierungsmittel solche der nachstehend aufgeführten Formeln eingesetzt:

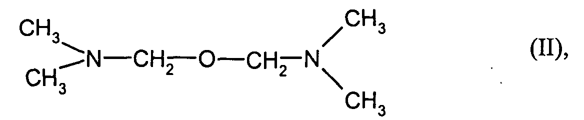

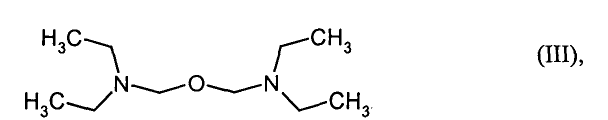

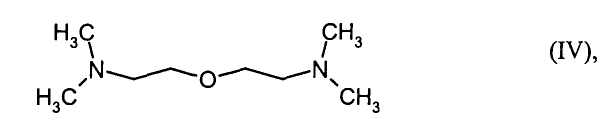

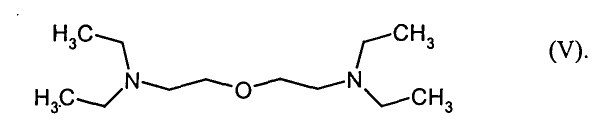

Die erfindungsgemäßen Modifizierungsmittel können z.B. hergestellt werden durch die in der Literatur beschriebenen Verfahren (z.B. EP-A 47 67 85, US-A 3 400 157, US-A 3 426 072, US-A 3 480 675, US-A 3 957 875).

Die erfindungsgemäßen Modifizierungsmittel können einzeln oder in beliebiger Kombination untereinander eingesetzt werden.

Selbstverständlich können die erfindungsgemäßen Modifizierungsmittel auch zusammen mit den literaturbekannten Randomizern bzw. Modifizierungsmitteln eingesetzt werden. Zu nennen sind z.B. Kaliumverbindungen der nachstehenden Formeln: R₁OK, R₂COOK, R₃R₄NK, wobei R₁, R₂, R₃, R₄ Alkylgruppen darstellen mit 1 bis 20 C-Atomen, Cycloalkylgruppen mit 3 bis 20 C-Atomen, Alkenylgruppen mit 2 bis 20 C-Atomen, Arylgruppen mit 5 bis 20 C-Atomen oder Phenylgruppen.

Beispiele für R₁OK sind Kaliumsalze einwertiger und mehrwertiger Alkohole, wie Methanol, Ethanol, n-Propanol, Isopropanol, tert.-Butylalkohol, tert.-Amylalkohol, Hexanol, Cyclohexanol, 2-Butenol, 4-Methylcyclohexanol, 3-Cyclopentenol, 3-Hexenol, Allylalkohol, 1,3-Dihydrohexan, 1,5,9-Trihydrotridecan, Benzylalkohol, Phenol, Catechol, Pyrogallol oder 1-Naphthol.

Beispiele für R₂COOK sind Kaliumsalze einwertiger oder mehrwertiger Carbonsäuren, wie Laurinsäure, Palmitinsäure, Stearinsäure, Sebacinsäure, Phenylessigsäure, Benzoesäure, Phthalsäure oder 1,8,16-Hexadecantricarbonsäure.

Beispiele für R₃R₄NK sind Kaliumsalze sekundärer Amine, besonders Kaliumsalze von Dimethylamin, Di-n-butylamin, Methyl-n-hexylamin, Di(3-hexenyl)amin, Diphenylamin oder Dibenzylamin. Verwiesen wird in diesem Zusammenhang auf US-A 5 550 200, US-A 3 294 768, EP-A 0 603 886 und US-A 3 674 760.

Darüber hinaus können die erfindungsgemäßen Modifizierungsmittel abgemischt werden mit Modifizierungsmittel, welche entweder nur Stickstoff oder nur Sauerstoff als Heteroatom besitzen; z.B. mit N,N,N',N'-Tetramethylethylendiamin, Trialkylaminen, N-Methylmorpholin, N-Phenylmorpholin, Tetrahydrofuran, Dioxan, Diethylenglykol-dimethylether und/oder Diethylether, wie sie z.B. in EP-A 0 304 589, DE-A 4 234 827, US-A 4 022 959, US-A 5 906 956 beschrieben sind.

Das jeweiligst günstigste Mischungsverhältnis kann dabei leicht durch entsprechende Vorversuche bestimmt werden und richtet sich u.a. nach dem gewünschten Verwendungszweck der Polymere und nach dem gewünschten Aufbau der Mikrostruktur.

Die erfindungsgemäßen, dreizähnigen Modifizierungsmittel, welche eine Kombination von tertiären Aminogruppen und Etherstruktureinheiten besitzen, werden verwendet zur Herstellung von Polymerisaten auf Basis von konjugierten Dienen oder Copolymerisaten auf Basis von konjugierten Dienen und vinylaromatischen Verbindungen.

Die Polymerisation oder Copolymerisation der genannten Monomeren wird dabei in üblicher Weise durchgeführt in einem geeigneten Lösungsmittel in Gegenwart von Alkali-organischen Verbindungen als Initiatoren, insbesondere Alkali-Lithiumverbindungen, wie Methyllithium, Ethyllithium, Isopropyllithium, n-Butyllithium, sek.-Butyllithium, n-Hexyllithium, tert. Octyllithium, n-Decyllithium sowie Aryllithiumverbindungen, wie Phenyllithium, Naphthyllithium, 4-Butylphenyllithium, 4-Phenylbutyllithium und Cyclohexyllithium, wobei n-Butyllithium und sek.-Butyllithium besonders bevorzugt sind. Die Menge des Lithiumkatalysators richtet sich nach der Art der Organolithiumverbindung und dem Molekulargewicht des herzustellenden Polymers.

Als geeignete inerte organische Lösungsmittel kommen dabei in Betracht: Kohlenwasserstoffe mit 5 bis 12 Kohlenstoffatomen, z.B. Pentan, Hexan, Heptan und Octan, sowie deren cyclischen Analogen. Darüber hinaus sind auch aromatische Lösungsmittel, wie Benzol oder Toluol, geeignet. Selbstverständlich können auch Gemische der vorstehend beschriebenen organischen Lösungsmittel eingesetzt werden.

Die anionische Polymerisation wird bekannterweise bei Temperaturen im Bereich von 5°C bis 130°C durchgeführt.

Die Menge der eingesetzten Alkali-organischen Verbindungen richtet sich insbesondere nach dem Molekulargewicht der Polymere, das eingestellt werden soll. Die günstigste Menge kann leicht durch Vorversucher ermittelt werden.

Als konjugierte Diene,'die bei der Polymerisation eingesetzt werden können, kommen z.B. in Betracht: 1,3-Pentadien, 2,3-Dimethyl-1,3-butadien, 2-Ethylbutadien, Piperylene, 2-Methyl-1,3-pentadiene, 4-Butyl-1,3-pentadien und 1,3-Hexadien, bevorzugt 1,3-Isopren und 1,3-Butadien, insbesondere 1,3-Butadien.

Als vinylaromatische Verbindungen, die mit den konjugierten Dienen copolymerisiert werden können, sind z.B. zu nennen: 1-Vinylnaphthalen, 2-Vinylnaphthalen, Styrol, 3-Methylstyrol, 4-Methylstyrol, 4-Propylstyrol, 4-Cyclohexylstyrol, 4-Dodecylstyrol, 2-Ethyl-4-benzylstyrol, 4-(Phenylbutyl)styrol, insbesondere Styrol.

Bei der Copolymerisation der konjugierten Diene mit den vinylaromatischen Verbindungen kann der jeweilige Anteil der beiden Monomeren in einem weiten Bereich variiert werden. Bevorzugt werden bei der Copolymerisation die konjugierten Diene in Mengen von 95 bis 50 Gew.-%, insbesondere 95 bis 65 Gew.-%, bezogen auf 100 g Polymer eingesetzt. Der Vinylgehalt beträgt im Allgemeinen 5 bis 90, bevorzugt 8 bis 85 Massen-%, bezogen auf die Menge an konjugierten Dienen.

Die erfindungsgemäßen Modifizierungsmittel werden bei der anionischen Polymerisation im Allgemeinen in Mengen von 0,1 bis 40 mol, bevorzugt 0,1 bis 10 mol, bezogen auf ein Mol des Initiators eingesetzt.

Ein weiterer Gegenstand der vorliegenden Erfindung sind Polymerisate auf Basis von konjugierten Dienen oder Copolymerisate auf Basis von konjugierten Dienen und vinylaromatischen Verbindungen, die durch anionische Polymerisation unter Verwendung der erfindungsgemäßen Modifizierungsmittel hergestellt werden.

Es werden also erfindungsgemäß mit Hilfe der Modifizierungsmittel Polydiene, insbesondere Polybutadien-Kautschuke (BR), oder Kautschuke auf Basis von konjugierten Dienen und vinylaromatischen Verbindungen, z.B. Styrol-Butadien Kautschuke (SBR) erhalten, die folgende charakteristischen physikalischen Merkmale aufweisen:
- SBR:: Molgewicht: 50 000 bis 1 500 000 g/mol,
Glasübergangstemperatur im Bereich von -70°C bis +5°C, insbesondere -65°C bis -5°C.
- BR:: Molgewicht: 50 000 bis 1 500 000 g/mol,
Glasübergangstemperatur im Bereich von -90°C bis -20°C, insbesondere -85°C bis -25°C.

Darüber hinaus ist Gegenstand der vorliegenden Erfindung die Verwendung der mit den erfindungsgemäßen Modifizierungsmitteln hergestellten Polymerisaten auf Basis von konjugierten Dienen oder Copolymerisaten auf Basis von konjugierten Dienen und vinylaromatischen Verbindungen zur Herstellung von technischen Gummiartikeln aller Art, insbesondere zur Herstellung von Reifen und Reifenbauteilen, wie Reifenlaufflächen und Reifenseitenwände, sowie die Verwendung zur Modifizierung von Kunststoffen, wie HIPS- und ABS-Kunststoffen.

Zur Herstellung der technischen Gummiartikel, insbesondere von Reifen, können selbstverständlich die erfindungsgemäß erhaltenen Polymerisate und Copolymerisate in üblicher Weise mit den verschiedensten synthetischen Kautschuken als auch mit Naturkautschuk abgemischt werden, um ein spezielles Eigenschaftsprofil bei den Gummiartikeln zu erzielen.

Beispielsweise ist es möglich, die erfindungsgemäßen Polymerisate und Copolymerisate abzumischen mit Naturkautschuk (NR), Isoprenkautschuk (IR), Styrol-Butadien-Kautschuk (SBR), Butadienkautschuk (BR), Acrylnitril-Butadien-Kautschuk (NBR), Chloropren (CR) und/oder EPDM-Kautschuk und zwar in den üblichen Mengenverhältnissen, d.h. 10 bis 90 Massen-%.

Den erfindungsgemäß hergestellten Polymerisaten oder Copolymerisaten bzw. deren Mischungen mit anderen synthetischen oder natürlichen Kautschuken können ebenfalls in üblicher Weise die bekannten Kautschukhilfsmittel und Zusatzmittel, wie Weichmacheröle, aromatische, aliphatische oder naphthenische Kohlenwasserstoffe, Zinkoxid, Stearinsäure, Harzsäuren, Alterungsschutzmittel und Oxonschutzwachse, sowie Vulkanisationsmittel auf Schwefel- oder peroxidischer Base, in den dafür bekannten Mengen zugesetzt werden.

Darüber hinaus können den Polymerisaten oder Copolymerisaten noch aktive, verstärkende Füllstoffe, wie Ruße oder Kieselsäuren mit unterschiedlicher Aktivität sowie deren Gemische, zugegeben werden, gegebenenfalls in Kombination mit den bekannten Silanen.

Neben den Vulkanisationsmitteln können noch die verschiedensten Beschleuniger den Kautschukmischungen zugegeben werden, z.B. Sulfenamide, Guanidine, Mercaptoverbindungen, Thiacarbamate oder Thiurame, um qualitative hochwertige Kautschukvulkanisate zu erhalten und den Vulkanisationsprozess günstig zu beeinflussen.

Die jeweils günstigste Menge der Kautschukhilfs- und Zusatzmittel kann leicht durch einfache, orientierende Versuche ermittelt werden und richtet sich nach dem späteren Verwendungszweck Kautschukvulkanisate.

Mit den erfindungsgemäßen Modifizierungsmitteln gelingt es also bei anionischer Polymerisation Polymerisate auf Basis von konjugierten Dienen oder Copolymerisate auf Basis von konjugierten Dienen und vinylaromatischen Verbindungen herzustellen, die sich insbesondere auszeichnen durch eine enge Molgewichtsverteilung, eine thermisch stabile Koordinierung der lebenden anionischen Polymeren, durch strenge alternierende Copolymerisation bei hohen und niedrigen Reaktionstemperaturen und gute Verarbeitbarkeit.

### Beispiele

### Beispiel 1

In einem getrockneten und mit Stickstoff überlagerten 2L Glasreaktor werden 850 g technisches Hexan vorgelegt und unter Rühren 1,28 ml (1,06 mmol) einer 20,09 %-igen Bis-(dimethylaminoethyl)ethan-Lösung zugegeben. Nahezu gleichzeitig werden dann 36 g Styrol, 112 g 1,3-Butadien und 0,42 ml (1,06 mmol) einer 23 %igen hexanischen BuLi-Lösung zudosiert. Anschließend wird ein Druck von 2-3 bar mittels Stickstoff im Reaktor eingestellt und auf 60-70°C hochgeheizt. Nach dem Start der Reaktion ist die Umsetzung nach 90 min beendet. Anschließend wird der Reaktorinhalt abgekühlt und in ein mit Stickstoff überlagertes Gefäß abgelassen und mit 2,5 g Vulkanox® BHT in Hexan stabilisiert. Anschließend wird das Polymer mit ca. 4L Ethanol ausgefällt und bei 60°C im Vakuumtrockenschrank getrocknet.

Die Mikrostruktur wurde mittels IR bestimmt und die Molmasse mittels GPC, Laufmittel THF, ermittelt.

### Analytik:

| Mooney ML 1+4 | 1,4-cis [%] | 1,4-trans [%] | 1,2-vinyl [%] | Styrol [%] | M_{w} [g/mol] | Polydispersität | T_{g} [°C] |
|---|---|---|---|---|---|---|---|
| 48 | 11,6 | 15,2 | 49,8 | 24 | 277930 | 1,2 | -24,6°C |

### Beispiel 2

In einem getrockneten und mit Stickstoff überlagerten 2L Glasreaktor werden 850 g technisches Hexan vorgelegt und unter Rühren 0,22 mmol Bis-(dimethylaminoethyl)ethan-Lösung zugegeben. Nahezu gleichzeitig werden dann 36 g Styrol, 112 g 1,3-Butadien und 0,42 ml (1,06 mmol) einer 23 %igen hexanischen BuLi-Lösung zudosiert. Anschließend wird ein Druck von 2-3 bar mittels Stickstoff im Reaktor eingestellt und auf 60-70°C hochgeheizt. Nach dem Versuchsstart wird der Versuch innerhalb von 90 min zu Ende reagieren gelassen. Anschließend wird der Reaktorinhalt abgekühlt und in ein Stickstoff überlagertes Gefäß abgelassen und mit 2,5 g Vulkanox® BHT in Hexan stabilisiert. Anschließend wird das Polymer mit ca. 4L Ethanol ausgefällt und bei 60°C im Vakuumtrockenschrank getrocknet.

Die Mikrostruktur wurde mittels IR bestimmt und die Molmasse mittels GPC, Laufmittel THF, ermittelt.

| Mooney ML 1+4 | 1,4-cis [%] | 1,4-trans [%] | 1,2-vinyl [%] | Styrol [%] | M_{w} [g/mol] | Polydispersität | Tg [°C] |
|---|---|---|---|---|---|---|---|
| 28 | 22,2 | 34,9 | 20,8 | 22,2 | 238829 | 1,11 | -51,7 |

### Beispiel 3

Die Durchführung entspricht dem Beispiel 1 allerdings bei einer Temperatur von 110°C. Die Mikrostruktur wurde mittels IR bestimmt und die Molmasse mittels GPC, Laufmittel THF, ermittelt.

| Mooney ML 1+4 | 1,4-cis [%] | 1,4-trans [%] | 1,2-vinyl [%] | Styrol [%] | M_{w} [g/mol] | Polydispersität | T_{g} [°C] |
|---|---|---|---|---|---|---|---|
| 48 | 13,1 | 17,6 | 45,0 | 24,5 | 280393 | 1,26 | -26,8°C |

## Patentansprüche

1. Modifizierungsmittel für die anionische Polymerisation von konjugierten Dienen oder von konjugierten Dienen mit vinylaromatischen Verbindungen, **dadurch gekennzeichnet, dass** sie auf einen Aminoether der Formel 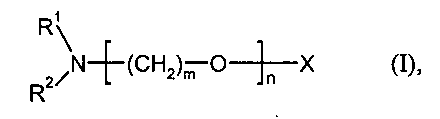 worin
R¹ und R² gleich oder verschieden sind und für Alkylreste mit 1 bis 10 C-Atomen, Cycloalkylreste mit 5 bis 8 C-Atomen, Arylreste mit 6 bis 10 Kohlenstoffatomen und für Aralkylreste mit 7 bis 15 Kohlenstoffatomen stehen,
X für 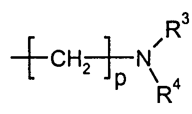 steht,
wobei
R³ und R⁴ die Bedeutung von R¹ und R² besitzen und p für ganze Zahlen von 1 bis 6 steht,
m für ganze Zahlen von 1 bis 6 und
n für ganze Zahlen von 1 bis 6 stehen,
beruhen.

2. Verwendung der Modifizierungsmittel nach Anspruch 1, zur Herstellung von Polymerisaten auf Basis von konjugierten Dienen oder Copolymerisaten auf Basis von konjugierten Dienen und vinylaromatischen Verbindungen.

3. Polymerisate auf Basis von konjugierten Dienen oder Copolymerisate auf Basis von konjugierten Dienen und vinylaromatischen Verbindungen, hergestellt durch anionische Polymerisation unter Verwendung der Modifizierungsmittel nach Anspruch 1.

4. Verwendung der Polymerisate und Copolymerisate nach Anspruch 3 zur Herstellung von technischen Gummiartikeln, insbesondere Reifen und Reifenbauteilen, und zur Modifizierung von Kunststoffen.
